# EUROPÄISCHE PATENTSCHRIFT

(11) **EP 4 147 089 B1**
(45) Veröffentlichungstag und Bekanntmachung des Hinweises auf die Patenterteilung: **15.04.2026**
(21) Anmeldenummer: 21728453.8
(22) Anmeldetag: 07.05.2021
(51) Int. Cl.: G02C 5/22

(54) **BRILLENGELENK**
SPECTACLES JOINT
CHARNIÈRE DE LUNETTES

(30) Priorität: 07.05.2020 DE 102020112407
(43) Veröffentlichungstag der Anmeldung: 15.03.2023
(73) Patentinhaber: Mykita Studio GmbH, 10997 Berlin (DE)
(72) Erfinder: GÜNTERT, Martin, 10969 Berlin (DE); KATER, Ina-Marie, 10969 Berlin (DE); KRÜGER, Moritz, 10969 Berlin (DE); MEIER, Norbert, 10969 Berlin (DE); TÜRR, Michael, 10969 Berlin (DE)
(74) Vertreter: Braeuning Schubert Patentanwälte GbR
(86) Internationale Anmeldenummer: PCT/EP2021/062212
(87) Internationale Veröffentlichungsnummer: WO 2021/224486

(56) Entgegenhaltungen:
- EP-A1- 1 584 968
- DE-C1- 4 339 517
- JP-A- 2002 268 017
- JP-A- 2002 296 547
- JP-A- 2004 258 329
- JP-A- 2013 148 826
- US-A1- 2010 091 237
- US-A1- 2019 162 983
- US-B1- 6 585 372

## Beschreibung

Die vorliegende Erfindung betrifft ein schraubenloses, federndes Brillengelenk.

Aus der DE 43 39 517 C1 ist ein Brillengestell mit Bügeln bekannt, welche horizontal schwenkbar an einem glasseitigen Anschlusselement angeordnet sind, wobei weiterhin die vertikale Bewegbarkeit der Bügel aufgrund von Gelenken gegeben ist. Der Nachteil des Standes der Technik ist, dass die Brillenbügel weder im offenen noch im geschlossen Zustand in einer festen Position angeordnet sind. Außerdem müssen mittels der einstellbaren Federkraft die Brillenbügel fixiert werden, in Abhängigkeit davon, in welchem Umfeld der Nutzer der Brille diese verwenden möchte.

In der US 658,537,2 B1 wird eine Verbindungsstruktur zwischen einem Bügelarm und einer Halterung für Brillen beschrieben, die einen angemessenen Widerstand gegen eine charakteristische Variation der Art der Entfaltung und der Faltbewegung von Brillenarm erzeugt, wobei diese durch den Bügelarm erzeugt wird.

Die JP 2002-268017 A offenbart den Aufbau einer Bügelverbindungsstruktur unter einfacher Ausnutzung der Rückstellkraft eines elastischen Federelements, wodurch dessen Montagearbeit verbessert, die Herstellungskosten verringert und eine enorme Vergrößerung eines umlaufenden Endstücks verhindert werden, um das Federelement darin aufzubauen .

In der JP 2013-148826 A wird die Bereitstellung einer Bügelverbindungsstruktur von Brillen durch Einraststruktur offenbart, deren Struktur und Montagearbeiten einfach sind.

Die US 2010/0091237 A eschreibt elastisches Scharnierelement für ein Brillengestell, wobei das Scharnierelement einen in einem Gehäuse angeordneten Schlitten und eine Rückstellfeder des Schlittens umfasst. Der Schlitten umfasst einen geführten Teil, der mit einer geführten Zone des Gestells arbeitet, und einem Ende, das ein Gelenk bildet, der sich nach außerhalb des Gehäuses erstreckt. Die Feder arbeitet unter Druck zwischen einem hinteren Anschlag, der in den Schlitten integriert ist, und einem vorderen Anschlag. Aufgabe der vorliegenden Erfindung ist es daher, die Nachteile des Standes der Technik zu überwinden und ein Brillengelenk zur Verfügung zu stellen, welche aus wenigen Bauteilen besteht und eine werkzeuglose Montage der Gelenkteile ermöglicht.

Die Aufgabe wird durch ein Brillengelenk mit den Merkmalen der Hauptansprüche gelöst. Vorteilhafte Weiterbildungen des erfindungsgemäßen Brillengelenks sind in den abhängigen Unteransprüchen gekennzeichnet.

Gegenstand der Erfindung ist ein Gelenk für ein Brillengestell mit Bügeln, wobei das Gelenk aus einem Frontteil, einem Bügelteil und einem Druckfederelement besteht, wobei das Bügelteil aus einem nach vorne, entlang einer Seite und innen offenen Quader besteht, und an den einander gegenüberliegenden Innenseiten des offenen Quaders kurze, nach innen gerichtete Drehachsen angeordnet sind, und wobei das Frontteil in Form einer Haltenase ausgebildet ist, wobei die Haltenase in den offenen Quader des Bügelteils einführbar ausgebildet ist und in zwei gegenüberliegenden Außenflächen der Haltenase Lagerhaken in Form von Ausnehmungen angeordnet sind, welche in die kurzen Drehachsen des Bügelteils einhängbar sind, wodurch das Frontteil und das Bügelteil gelenkig miteinander verbindbar und das Druckfederelement zwischen dem Frontteil und dem Bügelteil derart angeordnet ist, dass das Frontteil an den Drehachsen des Bügelteils bewegbar festgelegt ist.

Bevorzugt ist ein erfindungsgemäßes Gelenk, wobei das Bügelteil einen Einlagekörper aufweist, welcher sich vom Bügelteil zum Brillenbügel nach hinten erstreckt, wobei der Einlagekörper in den Brillenbügel einfügbar ausgestaltet ist.

Dabei ist besonders bevorzugt, dass der Einlagekörper einen Hohlraum zur Ausbildung eines Federgehäuses aufweist und dass das Bügelteil an der hinteren Wand des offenen Quaders eine Bohrung aufweist, sodass das Druckfederelement durch das Bügelteil hindurch in den Hohlraum des Einlagekörpers einführbar ist.

Bevorzugt ist ferner ein erfindungsgemäßes Gelenk, wobei das Frontteil weiterhin eine Grundplatte aufweist, welche am vorderen Teil der Haltenase angeordnet ist.

Dabei ist besonders bevorzugt, dass die Grundplatte derart ausgebildet ist, dass im geöffneten Zustand der Brillenbügels die Grundplatte die vorne offene Seite des Quaders des Bügelteil abdeckt.

Besonders bevorzugt ist ferner, dass an der nach vorne gerichteten Seite der Grundplatte ein Verbindungselement angeordnet ist, welches zur Befestigung der Fassung für die Brillengläser vorgesehen ist.

Weiterhin besonders bevorzugt ist ferner ein erfindungsgemäßes Gelenk, wobei Haltenase außen hinten einen Radius und innen hinten eine abgerundete Kante aufweist.

Besonders bevorzugt ist ferner ein erfindungsgemäßes Gelenk, wobei das Druckfederelement aus einer Druckfeder und einem Stift besteht, wobei der Stift in Richtung auf die Haltenase angeordnet ist.

Bevorzugt ist weiterhin ein Gelenk, wobei die Haltenase an der zum Stift hin ausgerichteten Seite derart ausgebildet ist, dass bei einem Winkelbereich der Gelenkteile zueinander von 90° bis 108° auf die Druckfeder eine gleichbleibende Druckkraft ausgeübt wird.

Bevorzugt ist somit weiterhin ein Gelenk, wobei die Haltenase an der zum Stift hin ausgerichteten Seite derart ausgebildet ist, dass bei einem Winkelbereich, zwischen dem Frontteil und dem Bügelteil, von 0° bis 18° auf die Druckfeder keine zusätzliche Entspannung mehr erfährt und die Federung somit kurz vor dem Einschlagen des Bügels in die Front aufgehoben ist.

Erfindungsgemäß bevorzugt ist ferner ein erfindungsgemäßes Gelenk, wobei der Stift mit der Druckfeder fest oder lösbar verbunden ist.

Ein weiterer Gegenstand der vorliegenden Erfindung ist ein Gelenk, für ein Brillengestell mit Bügeln, wobei das Gelenk aus einem Frontteil, einem Bügelteil und einem Druckfederelement besteht, wobei das Frontteil aus einem nach vorne, entlang einer Seite und innen offenen Quader besteht, und an den einander gegenüberliegenden Innenseiten des offenen Quaders kurze, nach innen gerichtete Drehachsen angeordnet sind, und wobei das Bügelteil in Form einer Haltenase ausgebildet ist, wobei die Haltenase in den offenen Quader des Frontteils einführbar ausgebildet ist und in zwei gegenüberliegenden Außenflächen der Haltenase Lagerhaken in Form von Ausnehmungen angeordnet sind, welche in die kurzen Drehachsen des Frontteils einhängbar sind, wodurch das Frontteil und das Bügelteil gelenkig miteinander verbindbar und das Druckfederelement zwischen dem Frontteil und dem Bügelteil derart angeordnet ist, dass das Bügelteil an den Drehachsen des Frontteils bewegbar festgelegt ist.

Erfindungsgemäß bevorzugt ist weiterhin ein erfindungsgemäßes Gelenk, wobei das Druckfederelement in Form einer Blattfeder und/oder in Form eines Elastomerteils und/oder Gummiformteils ausgebildet ist.

Die vorliegende Erfindung wird mit den beigefügten Zeichnungen näher erläutert. Es zeigt:
Fig. 1 eine perspektivische Explosionsdarstellung eines erfindungsgemäßen Brillengelenks;
Fig. 2 Teilschnittdarstellungen des erfindungsgemäßen Brillengelenks in drei Zustandspositionen während des Einhängens des Gelenks;
Fig. 3 eine Schnittdarstellung des erfindungsgemäßen Brillengelenks; und
Fig. 4 drei Aufsichten des erfindungsgemäßen Brillengelenks in drei verschiedenen Lagepositionen entlang der Längsachse.

### Definitionen

Die hierin angegebenen Positions- und Richtungsangaben sind wie folgt zu verstehen:
vorne: Blickrichtung des Trägers der Brille;
hinten: entgegengesetzt zu vorne (Richtung Ohr);
innen: kopfseitig, zur Körpermitte des Trägers der Brille hin;
außen: kopfseitig, weg von der Körpermitte des Trägers der Brille gerichtet.
Gelenkstellung 180°: Bügel vollständig geöffnet.
Gelenkstellung 90°: Bügel vollständig eingeschlagen.

Das erfindungsgemäße Gelenk weist zwei definierte Endpositionen auf, nämlich offen und geschlossen, in die es beim Öffnen und Schließen des Brillenbügels hineinschnappt. Dies wird mittels des Zusammenspiels eines gefederten Stiftes und einer unrunden Lauffläche erreicht. Die frontseitigen und bügelseitigen Gelenkteile, nämlich das Frontteil und das Brillenteil, lassen sich durch das Einhängen der Drehachse in einen Lagerhaken ohne Werkzeuge montieren und demontieren.

Der Brillenbügel, welcher beispielsweise aus Kunststoff oder Metall besteht, enthält vorzugsweise einen Metallkern bzw. besteht vollständig aus Metall. Besonders bevorzugt ist die Variante eines Metallkerns in einem Kunststoffbügel, welches als Bügeleinlage bezeichnet wird.

Eine Druckfeder, bevorzugt eine Spiralfeder aus Federstahl, und ein davor vormontiert oder lose eingelegter Stift, beispielsweise aus Metall oder Keramik, sind im vorderen Teil der Bügeleinlage in einem Federgehäuse beweglich gelagert. Das Federgehäuse kann außen Widerhaken oder andere Oberflächenstrukturen aufweisen, die das Herausrutschen aus dem umliegenden Kunststoff des Brillenbügels verhindern. Der Querschnitt des Federgehäuses kann rund oder vieleckig, bevorzugt als Verdrehsicherung, ausgeführt werden. Die Einlage kann in den Kunststoffbügel durch Einschwemmen, beispielsweise mittels Vibration oder Erhitzen, Umspritzen, Nieten, Kleben oder Verschrauben eingebracht und fixiert werden.

Es ist erfindungsgemäß ferner vorgesehen, dass die Druckfeder auch in Form einer Blattfeder vorliegen kann. Bevorzugt ist auch ein Federelement in Form von Elastomer- oder Gummiformteilen.

Am vorderen Ende der Bügeleinlage ist das bügelseitige Gelenkteil angebracht. Dies ist vorzugsweise durch Metal Injection Moulding aus Stahl hergestellt und mit der Einlage verschweißt oder verlötet, kann aber auch mit der Einlage an einem Stück gefertigt werden. Das Gelenkteil besteht aus einem nach vorne und innen offenen Kasten, in dem oben und unten zwei kurze Drehachsen sitzen. Die innere vordere Kante des Kastens weist eine Fase auf, welche dem Gelenk im montierten Zustand die nötige Bewegungsfreiheit gibt. Die hintere Wand des Kastens hat eine Bohrung, durch welches das Federelement montiert und demontiert werden kann. Die Kürze der Achsen lässt ausreichend Platz dafür.

Das frontseitige Gelenkteil ist vorzugsweise in einem Stück ebenfalls durch Metal Injection Moulding aus Stahl hergestellt, kann aber auch frästechnisch oder durch Strangpressen/Fräsen erzeugt werden. Die Brillenfront kann aus Kunststoff oder Metall gefertigt sein. Besonders bevorzugt ist eine Front aus thermoplastischem Kunststoff. Das frontseitige Gelenkteil weist eine Montagevorrichtung auf, welche das Einbringen in eine Kunststofffront erlaubt. Dies kann durch heißes Einschwemmen, Vibrationsschweißen, Kleben, Nieten oder Verschrauben erfolgen. Es kann auch mit einem weiteren Metallteil an der Vorderseite der Front verpresst werden. Besonders bevorzugt ist das Einschwemmen eines sogenannten Einschwemmpilzes durch Vibration und Druck.

Der Einschwemmpilz bzw. die Nietaufnahme oder eine andere geeignete Montagevorrichtung, ist auf einer Grundplatte angeordnet, welche die Positionierung des frontseitigen Gelenkteils auf dem Kunststoff definiert und ein zu tiefes Einsinken verhindern soll. Die Grundplatte kann auch als Anschlag für das bügelseitige Gelenkteil dienen. Die Grundplatte ist für die Bewegung des Gelenks nicht erforderlich, verhindert aber im montierten Zustand die ungewollte Demontage des Gelenks in jeder Bügelposition.

Auf der Grundplatte sitzt wiederum eine Nase, bevorzugt in Form einer Haltenase, die in den bügelseitigen Gelenkkasten passt, und außen hinten einen Radius und innen hinten eine leicht abgerundete Kante aufweist. Die Kante bildet im montierten Zustand die unrunde Lauffläche für das bügelseitige Federelement. Die Nase kann auch als Anschlag für das bügelseitige Gelenkteil dienen. Auf der Ober- und Unterseite der Nase befindet sich eine nach außen offene Hakengeometrie, die als Lager für die Achsstifte des Bügelteils dient. Diese Hakengeometrie ermöglicht die werkzeuglose Montage des Bügel an der Front, ähnlich einem Bajonettprinzip. Durch eine Bewegung des Bügels relativ zur Front von außen nach innen in einem Winkel von ca. 45° kann man mit der Innenseite der frontseitigen Nase den gefederten Stift in das Federgehäuse hineindrücken und so die Achsen von außen in den Haken hineinbringen. Lässt man nun den Bügel los, drückt das Federelement die Achse in den Haken hinein und das Gelenk lässt sich in einem Winkel von 180° bis 90° öffnen und schließen. Dabei drückt die eckige Lauffläche des Stiftes diesen bei einer Bügelstellung von 45° relativ zur Front am weitesten zurück. Bei den Stellungen 90° und 180° ist die Feder dagegen am entspanntesten. So ergeben sich definierte Endpositionen für die Bügelbewegung.

In einer weiteren Ausführungsform des erfindungsgemäßen Gelenks ist vorgesehen, dass im Winkelbereich von 108° bis 90°, also kurz vor dem vollständigen Einklappen des Bügels, keine weitere Federung in Richtung Front vorgesehen ist. Hierzu wird die Lauffläche der Haltenase derart ausgeformt, dass vor dem Anschlag des Bügels an die Front in einem Winkelbereich von 108° bis 90° keine Federkraft mehr nach innen wirkt, sondern nur noch eine Gangregulierung stattfindet. Die Feder bleibt also auf dem letzten Wegstück des Bügels gleichbleibend komprimiert. Die Vorteile dieser Ausführungsform liegen darin, dass durch konstanten Druck des Bügels auf die Front und auf den jeweils anderen Bügel, ausgeübt durch die Feder, über längere Zeit und unter Wärmeeinwirkung eine Verformen des Kunststoffs und eine Verformung der Brille insgesamt verhindert werden kann. Da die Feder also auf dem letzten Wegstück des Bügels gleichbleibend komprimiert bleibt, kann somit eine ungewünschte Verformung des Rahmens verhindert werden.

Die Federkraft und damit das Federverhalten des Bügels lassen sich durch die Variablen Länge, Windungsanzahl und Drahtdicke der Druckfeder und Länge des Stiftes variieren. Es lässt sich also ohne Austausch des Gelenks dessen Verhalten nachträglich verändern.

Das Gelenk lässt sich durch eine Bewegung des Bügels relativ zur Front nach vorne und außen und einem Winkel, Bügel zu Front, von ca. 45° ebenfalls werkzeuglos wieder demontieren. Der Austausch des Federelements ist so möglich, sollte die Feder mit der Zeit ermüden. Die Schmierung des Mechanismus mit ein wenig Öl oder Schmierfett ist empfohlen, um Abrieb zu minimieren. Die Applikation eines dickflüssigen Schmierfetts auf die Feder vor deren Montage hat zwei wünschenswerte Vorteile: Das Federgehäuse dient als Pumpreservoir für das Schmiermittel und durch die Viskosität des Fetts ist die Wahrscheinlichkeit, dass die Feder, einschließlich des Stiftes, bei der Demontage verlorengeht, deutlich minimiert.

Mit dem erfindungsgemäßen Aufbau lassen sich Brillengelenke mit einer minimalen Bauhöhe von 4 mm realisieren. Allerdings kann, je nach Gestaltung der Brille, die Bauhöhe in beliebiger Weise gewählt werden. Eine weitere Minimierung wird durch die praktikablen Federdurchmesser und die minimalen Wandstärken von Federgehäuse und Kunststoffummantelung desselben begrenzt, sie ist aber denkbar. Größere Bauhöhen sind problemlos möglich. Die Gelenkteile können durch Polieren, PVD-Beschichtung oder Galvanik veredelt werden. Die hier hauptsächlich beschriebene auf dem Kunststoff aufsetzende Montage ist bevorzugt, jedoch lassen sich auch auf die Bügelinnenseite versetzte Gelenkpositionen realisieren, die das Gelenk von außen bei offener Bügelposition unsichtbar machen, was auch eine hohe Flexibilität bei der Wahl der Bügelbauhöhe erlaubt.

Es ist erfindungsgemäß weiterhin vorgesehen, das Bügelteil, vorzugsweise einschließlich der Bügeleinlage, vollständig in den Kunststoff des Bügels einzuschließen. Somit ist das Gelenk von außen nicht mehr sichtbar. Besonders bevorzugt ist es dabei, dass der Kunststoff Acetat, insbesondere Celluloseacetat, oder Polyamid, insbesondere lasergesintertes Polyamid 12, ist.

Erfindungsgemäß bevorzugt sind unterschiedliche Ausführungsformen der Befestigung des erfindungsgemäßen Brillengelenks an der Brillenfassung. Die Befestigung des erfindungsgemäßen Gelenks an der Fassung kann durch Einschwemmen, Nieten, Verschrauben, Kleben, Vergießen, Verpressen erfolgen. Bestehen Bauteile der Front des Brillengestells aus Metallen oder Legierungen, so kann die Befestigung des Gelenks durch Schweißen oder Löten oder anderen Verfahren zum Zusammenfügen von metallischen Werkstoffen erfolgen. Die jeweiligen hierin genannten Fügemethoden und - verfahren erfordern verschiedene optimale Ausformungen des Gelenkfrontstücks, wie beispielsweise Einschwemmpilz, Schraubdom, Einklebestift und dergleichen, und sind aber von der von der erfindungsgemäßen Gelenkfunktion unabhängig variierbar.

Erfindungsgemäß bevorzugt sind ferner auch unterschiedliche Ausführungsformen zur Anbringung des erfindungsgemäßen Brillengelenks am Brillenbügel, welche ebenfalls variabel ausgestaltet werden können. Bevorzugt ist hierbei das Einschwemmen, Heißnieten, Warmumformen oder Einpressen des erfindungsgemäßen Gelenks in einen Kunststoffbügel oder ein Bügelende. Das Zusammenfügen der Bauteile kann aber auch durch Kleben, Verschrauben, Nieten, Vergießen, Verpressen oder andere bekannte Fügetechniken erfolgen. Bestehen Bauteile des Brillenbügels aus Metallen oder Legierungen, so kann die Befestigung des Gelenks durch Schweißen oder Löten oder anderen Verfahren zum Zusammenfügen von metallischen Werkstoffen erfolgen. Ferner ist es erfindungsgemäß vorgesehen, für Kunststoffbügel eine Bügeleinlage in Draht- oder Blechform auszuformen, die sich direkt an das Federgehäuse des erfindungsgemäßen Brillengelenks anschließt. Erfindungsgemäß ist ferner vorgesehen, einen Metallbügel mit dem erfindungsgemäßen Brillengelenk an einem Stück herzustellen, indem das Federgehäuse sich nicht in einer Bügeleinlage, sondern in einem Metallbügel fortsetzt.

Die bisher beschriebene Anordnung der Bauteile, wobei die Haltenase frontseitig angebracht ist und Achse, Stift und Feder zur bügelseitigen Baugruppe angeordnet sind, ist die längliche Spiralfeder platzsparend in dem Bügelkörper angeordnet. Erfindungsgemäß ist aber auch eine umgekehrte Orientierung der Bauteile vorgesehen. Durch eine Verkürzung und Verbreiterung des Federelements oder durch die Verwendung eines anderen Federkonzeptes, beispielsweise in Form einen Blattfeder oder eines Elastomer- oder Gummiformteils, lässt sich dieses Federkonzept in der Front unterbringen und somit das gesamte erfindungsgemäße Brillengelenk in umgekehrter Anordnung verbauen. Auch diese Anordnung stellt eine erfindungsgemäße Ausführungsform des erfindungsgemäßen Brillengelenks dar. Dem Fachmann ist klar, dass diese Form der Anordnung der Bauteile sich teilweise auch aus den zuvor genannten Ausführungsformen in der umgekehrten Anordnung der Bauteile herleiten lässt und diese Ausführungsform umfänglich der vorliegenden Beschreibung zu entnehmen ist.

Die nachfolgenden Ausführungsbeispiele erläutern die Erfindung näher, ohne den Umfang der Erfindung zu beschränken. Die Erfindung und deren Ausführungsformen werden nun anhand der beigefügten Figuren näher beschrieben.

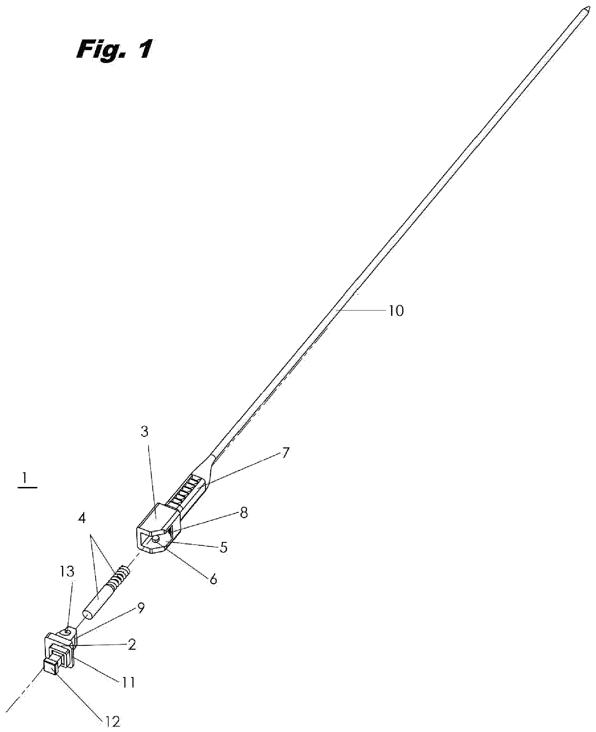

In der Figur 1 ist eine perspektivische Explosionsdarstellung eines erfindungsgemäßen Brillengelenks 1 gezeigt. Das Brillengelenk 1 besteht aus dem Frontteil 2 und dem Bügelteil 2, welche ineinander einhängbar ausgestaltet sind. Das Frontteil 2, welches mittels der Montagevorrichtung 12 in die Brillenfront integriert werden kann, weist eine Haltenase 9 auf, welche in Richtung auf den Brillenbügel angeordnet ist. An den Außenflächen von zwei einander gegenüber liegenden Seitenflächen der Haltenase 9 sind Lagerhaken 13 angeordnet. Die Lagerhaken 13 können beispielsweise in die jeweiligen Seitenflächen der Haltenase 9 eingefräst werden. Die Haltenase 9 ist in ihren Abmessungen derart ausgestaltet, dass die Haltenase 9 in den Hohlkörper des Bügelteils 3 des Gelenks 1 einführbar und einhakbar ist. Das Frontteil 2 weist weiterhin eine Grundplatte 11 auf, welche verschiedene Zwecke erfüllt. Die Grundplatte 11 kann als Anschlag an das Bügelteil 3 dienen und/oder das ungewollte Demontieren der Gelenkteile 2,3 verhindern. Das zweite Teil des Gelenks 1 wird als Bügelteil 3 bezeichnet. Das Bügelteil 3 weist eine Vorrichtung zur Aufnahme des Frontteils 2 auf. Diese Aufnahmevorrichtung ist in Form eines Quaders ausgebildet, welcher im Inneren offen ist und wobei zwei Seitenflächen des Quaders, nämlich die vordere Seite, welche dem Frontteil 2 im montierten Zustand des Gelenks zugewandt ist, vollständig entfernt ist, und eine Längsseite, welche sich von der vorderen Seite des Quaders in Richtung auf die Bügeleinlage 10 hin erstreckt, teilweise entfernt ist, wobei der verbleibende Rest der Quaderseitenfläche an der nach vorne gerichteten Seitenkante eine Fase 8 umfasst. Vorteilhafterweise werden die Ecken der einander gegenüber liegenden Quaderseitenfläche abgeschrägt, um das Einhängen der Haltenase 9 in den offenen Quader zu ermöglichen. An den Quaderinnenseiten 5, welche die Innenseitenflächen der einander gegenüber liegenden Quaderseitenflächen sind, sind kurze Drehachsen 6 angeordnet. Die Drehachsen 6 weisen eine Höhe auf, welche das Einhaken der Lagerhaken 13 ermöglichen, aber ferner genügend Abstand zueinander aufweisen, um das Federelement 4 bei der Montage des Gelenks hindurch zu führen. Um das Federelement 4 in die Bügeleinlage 10 einzuführen, weist die Aufnahmevorrichtung in Form des Quaders an der der Bügeleinlage 10 zugewandten Seite eine Öffnung (nicht dargestellt) auf.

Diese Öffnung steht dann in räumlicher Verbindung zum Federgehäuse 7, welches Teil der Bügeleinlage ist. Das Federgehäuse nimmt das Federelement 4 auf, so dass das Federelement 4 die erforderliche Federspannung auf das Gelenk ausübt.

Das dritte Bauteil des Gelenks 1 ist das Federelement 4. Das Federelement 4 wird während der Montage des Gelenks in das Federgehäuse 7 eingelegt. Das Federelement 7 wirkt dann mit der Federkraft auf die Haltenase 9 des Frontteils 2 und bewirkt, dass die kurzen Drehachsen 6 und die Lagerhaken 13 unter Federspannung stehen. Im geöffneten und im geschlossenen Zustand des Gelenks ist das Federelement 4 in einem entspannten Zustand, so dass der Verschleiß der Federkraft gering bleibt.

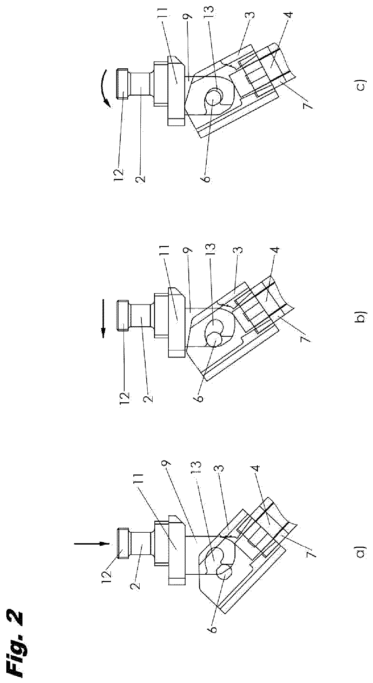

Figur 2 zeigt Teilschnittdarstellungen des erfindungsgemäßen Brillengelenks in drei Zustandspositionen während des Einhängens des Gelenks. Zur Montage des Gelenks 1 wird zunächst das Federelement 4 in das Federgehäuse 7 des Bügelteils 1 eingelegt. In der Figur 2a ist gezeigt, wie die Haltenase 9 des Frontteils 2 in den offenen Quader des Bügelteils 3 eingeführt wird. Die Haltenase 9 ist dabei derart ausgerichtet, dass die offene Seite der Lagerhaken 13 auf die Drehachsen 6 hin ausgerichtet sind. Gleichzeitig wird auf das Federelement 4 durch die Haltenase 9 Druck ausgeübt, so dass das Federelement 4 unter Spannung steht. Wenn die Drehachse 6 in der Lagerhaken 13 einrastet, wird die Haltenase 9 in Richtung auf die Drehachsen 6 seitlich verschoben, wie dies in der Figur 2b gezeigt ist. In der Figur 2b ist nun gezeigt, dass die Drehachsen 6 vom Lagerhaken 13 umschlossen sind und das Frontteil 2 nun beweglich gelagert ist und, wie durch den Pfeil oberhalb der Montagevorrichtung 12 dargestellt, in den offenen Zustand des Gelenks übergeführt werden kann. Ist das Gelenk im geöffneten Zustand, so liegt das Federelement 4 am hinteren Ende der Haltenase 9 an und ist in einem entspannten Zustand. Durch eine Bewegung des Frontteils 2 in die entgegen gesetzte Richtung übt die Haltenase 9 Druck auf das Federelement 4 aus und beim Erreichen des geschlossenen Zustands entspannt sich das Federelement 4 und liegt dann an der Seitenwand der Haltenase an. Besonders bevorzugt ist dabei, dass die Lauffläche der Haltenase derart ausgeformt, dass vor dem Anschlag des Bügels an die Front in einem Winkelbereich von 108° bis 90° keine Federkraft mehr nach innen wirkt, sondern nur noch eine Gangregulierung stattfindet.

In der Figur 2 wird somit gezeigt, wie die werkzeuglose Montage des Gelenks durch das Zusammenfügen der Bauteile, nämlich des Frontteils 2, des Federelements 4 und des Bügelteils 3, durchführbar ist.

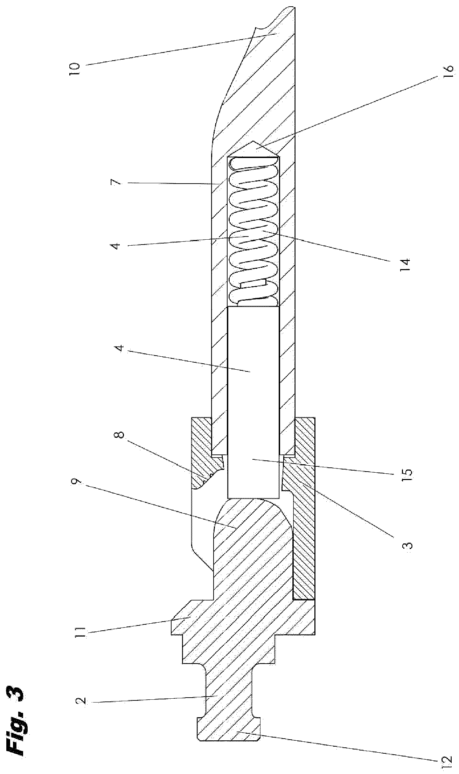

Figur 3 zeigt eine Schnittdarstellung des erfindungsgemäßen Brillengelenks. Dargestellt ist ein Gelenk 1 im geöffneten Zustand. Im Bügelteil 3 ist das Frontteil 2 eingehängt. Die Drehachsen und die Lagerhaken sind wegen der Art der Schnittdarstellung nicht dargestellt. Die Haltenase 9 liegt am Federelement 4 an. Das Federelement 4 selbst besteht aus mehreren Bauteilen. Zunächst ist die Druckfeder 14 dargestellt, welche an einem Stift 15 anliegt oder mit diesen fest oder lösbar verbunden ist. Der Stift 15 besteht vorzugsweise aus einem Material, welches die gleiche oder eine geringere Härte besitzt als das Frontteil 2 und/oder die Haltenase 9, um den Abrieb bei der Bewegung des Gelenks zu minimieren. Dadurch ist es möglich, bei zu hohem Abrieb ggf. den Stift 15 auszutauschen. Die Materialien können aus Neusilber, Bronze, weicheren Stählen oder reibungsarmen Kunststoffen ausgewählt sein. Der nach vorne gerichtete Teil des Stifts 15 kann ggf. auch abgerundet bis halbkugelförmig ausgebildet sein. Es ist erfindungsgemäß auch vorgesehen, dass lediglich der nach vorne gerichtete Teil des Stifts 15 aus den zuvor beschriebenen Materialien ausgewählt ist. Es ist erfindungsgemäß aber auch vorgesehen, den Stift 15 oder den nach vorne gerichteten Teils des Stiftes 15 mit einem gleitfähigen Kunststoff zu beschichten. Das Federelement 4 ist im Federgehäuse 7 eingelegt. Das Federgehäuse 7 ist in Form eines Hohlraums, bevorzugt in Form einer Bohrung im Inneren der Bügeleinlage 10 ausgebildet.

In einer weiteren bevorzugten Ausführungsform können die miteinander in gleitender Bewegung stehenden Bauteile, nämlich die Haltenase 9 und die an der Haltenase 9 anliegende Vorderseite des Stiftes 15 halbkugelförmig oder in anderer Weise abgerundet ausgebildet sein. Dies führt zu einer geringeren Reibung, da der Bereich der aneinander liegenden Oberflächen kleinflächiger ausgestaltet geringer ist. Auch hierdurch kann die Reibungswirkung zwischen den Bauteilen verringert werden.

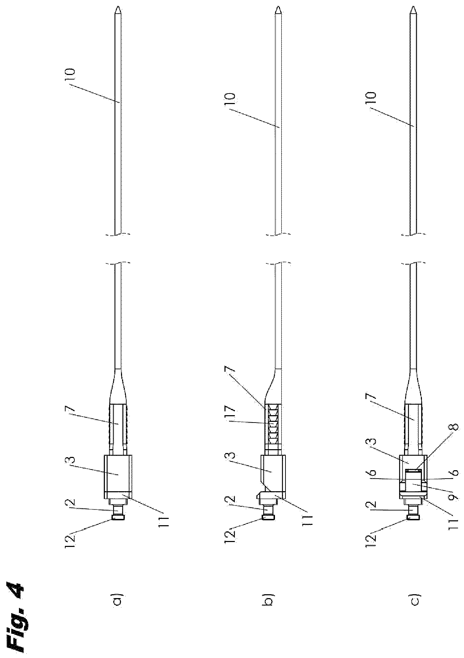

In der Figur 4 sind drei Aufsichten des erfindungsgemäßen Brillengelenks in drei verschiedenen Lagepositionen entlang der Längsachse dargestellt.

Die Figur 4a zeigt eine Aufsicht auf den Seitenbereich des geöffneten Gelenks. Hierbei ist wegen der Form und Abmessung der Grundplatte 12 das Gelenk an sich nicht sichtbar. Die Figur 4b zeigt eine Aufsicht auf den oberen bzw. unteren Bereich des geöffneten Gelenks. Das Gelenk ist an sich auch hier nicht zu erkennen. Lediglich die abgeschrägten Kanten des Quaders zur Aufnahme der Haltenase sind erkennbar. Zur Verbesserung der Montagemöglichkeiten der Bügeleinlage in einen Kunststoff oder anderen Werkstoff, ist an der Außenseite des Federgehäuses eine Oberflächenstruktur 17 dargestellt. Diese Oberflächenstruktur 17 kann beliebige Formengestaltungen aufweisen, um die Bügeleinlage im Brillenbügel optimal zu befestigen. In der Figur 4c ist nun die Innenansicht des geöffneten Brillengelenks dargestellt. Die einzelnen Bauteile und Merkmale des erfindungsgemäßen Gelenks sind erkennbar dargestellt.

### Bezugszeichenliste

- 1: Brillengelenk
- 2: Frontteil
- 3: Bügelteil
- 4: Federelement
- 5: Quaderinnenseite
- 6: Drehachse
- 7: Federgehäuse
- 8: Fase
- 9: Haltenase
- 10: Bügeleinlage
- 11: Grundplatte
- 12: Montagevorrichtung
- 13: Lagerhaken
- 14: Druckfeder
- 15: Stift
- 16: Hohlraum/Bohrung
- 17: Oberflächenstruktur

## Patentansprüche

1. Gelenk für ein Brillengestell mit Bügeln, wobei das Gelenk (1) aus einem Frontteil (2), einem Bügelteil (3) und einem Druckfederelement (4) besteht, wobei das Bügelteil (3) aus einem nach vorne, entlang einer Seite und innen offenen Quader besteht, und an den einander gegenüberliegenden Innenseiten (5) des offenen Quaders kurze, nach innen gerichtete Drehachsen (6) angeordnet sind, und wobei das Frontteil (2) in Form einer Haltenase (9) ausgebildet ist, wobei die Haltenase (9) in den offenen Quader des Bügelteils (3) einführbar ausgebildet ist und in zwei gegenüberliegenden Außenflächen der Haltenase (9) Lagerhaken (13) in Form von Ausnehmungen angeordnet sind, welche in die kurzen Drehachsen (6) des Bügelteils (3) einhängbar sind, wodurch das Frontteil (2) und das Bügelteil (3) gelenkig miteinander verbindbar und das Druckfederelement (4) zwischen dem Frontteil (2) und dem Bügelteil (3) derart angeordnet ist, dass das Frontteil (2) an den Drehachsen (6) des Bügelteils (3) bewegbar festgelegt ist.

2. Gelenk, gemäß Anspruch 1, **dadurch gekennzeichnet, dass** das Bügelteil (3) einen Einlagekörper (10) aufweist, welcher sich vom Bügelteil (3) zum Brillenbügel nach hinten erstreckt, wobei der Einlagekörper (10) in den Brillenbügel einfügbar ausgestaltet ist.

3. Gelenk, gemäß Anspruch 2, **dadurch gekennzeichnet, dass** der Einlagekörper (10) einen Hohlraum (16) zur Ausbildung eines Federgehäuses (7) aufweist und dass das Bügelteil (3) an der hinteren Wand des offenen Quaders eine Bohrung aufweist, sodass das Druckfederelement (4) durch das Bügelteil hindurch in den Hohlraum (7) des Einlagekörpers (10) einführbar ist.

4. Gelenk, gemäß einem der voranstehenden Ansprüche, **dadurch gekennzeichnet, dass** das Frontteil (2) weiterhin eine Grundplatte (11) aufweist, welche am vorderen Teil der Haltenase (9) angeordnet ist.

5. Gelenk, gemäß Anspruch 4, **dadurch gekennzeichnet, dass** die Grundplatte (11) derart ausgebildet ist, dass im geöffneten Zustand der Brillenbügels die Grundplatte (11) die vorne offene Seite des Quaders des Bügelteil (3) abdeckt.

6. Gelenk, gemäß Anspruch 4 oder 5, **dadurch gekennzeichnet, dass** an der nach vorne gerichteten Seite der Grundplatte (11) ein Verbindungselement (12) angeordnet ist, welches zur Befestigung der Fassung für die Brillengläser vorgesehen ist.

7. Gelenk, gemäß einem der voranstehenden Ansprüche, **dadurch gekennzeichnet, dass** die Haltenase (9) außen hinten einen Radius und innen hinten eine abgerundete Kante aufweist.

8. Gelenk, gemäß einem der voranstehenden Ansprüche, **dadurch gekennzeichnet, dass** das Druckfederelement (4) aus einer Druckfeder (14) und einem Stift (15) besteht, wobei der Stift (15) in Richtung auf die Haltenase (9) angeordnet ist.

9. Gelenk, gemäß einem der voranstehenden Ansprüche, **dadurch gekennzeichnet, dass** die Haltenase (9) an der zum Stift (15) hin ausgerichteten Seite derart ausgebildet ist, dass bei einem Winkelbereich der Gelenkteile zueinander von 90° bis 108° auf die Druckfeder (14) eine gleichbleibende Druckkraft ausgeübt wird.

10. Gelenk, gemäß Anspruch 9, **dadurch gekennzeichnet, dass** der Stift (15) mit der Druckfeder (14) fest oder lösbar verbunden ist.

11. Gelenk, für ein Brillengestell mit Bügeln, wobei das Gelenk (1) aus einem Frontteil (2), einem Bügelteil (3) und einem Druckfederelement (4) besteht, wobei das Frontteil (2) aus einem nach vorne, entlang einer Seite und innen offenen Quader besteht, und an den einander gegenüberliegenden Innenseiten (5) des offenen Quaders kurze, nach innen gerichtete Drehachsen (6) angeordnet sind, und wobei das Bügelteil (3) in Form einer Haltenase (9) ausgebildet ist, wobei die Haltenase (9) in den offenen Quader des Frontteils (2) einführbar ausgebildet ist und in zwei gegenüberliegenden Außenflächen der Haltenase (9) Lagerhaken (13) in Form von Ausnehmungen angeordnet sind, welche in die kurzen Drehachsen (6) des Frontteils (2) einhängbar sind, wodurch das Frontteil (2) und das Bügelteil (3) gelenkig miteinander verbindbar und das Druckfederelement (4) zwischen dem Frontteil (2) und dem Bügelteil (3) derart angeordnet ist, dass das Bügelteil (3) an den Drehachsen (6) des Frontteils (2) bewegbar festgelegt ist.

12. Gelenk, gemäß einem der voranstehenden Ansprüche, **dadurch gekennzeichnet, dass** das Druckfederelement (4) in Form einer Blattfeder und/oder in Form eines Elastomerteils und/oder Gummiformteils ausgebildet ist.

## Claims

1. Joint for a spectacle frame with temples, wherein the joint (1) consists of a front part (2), a temple part (3) and a compression spring element (4), wherein the temple part (3) consists of a cuboid open towards the front, along one side and on the inside, and short, inwardly directed axes of rotation (6) are arranged on the opposing inner sides (5) of the open cuboid, and wherein the front part (2) is designed in a form of a holding lug (9), wherein the holding lug (9) is designed to be insertable into the open cuboid of the temple part (3), and wherein hinging hooks (13) in form of recesses are arranged in two opposing outer surfaces of the holding lug (9), which are hookable in the short axes of rotation (6) of the temple part (3), whereby the front part (2) and the temple part (3) are jointly connectable with one another and the compression spring element (4) is arranged between the front part (2) and the temple part (3) in such a way that the front part (2) is fixed movably on the axes of rotation (6) of the temple part (3).

2. Joint according to claim 1, characterize in that the temple part (3) has an insert body (10), which extends rearwardly from the temple part (3) to the spectacle temple, wherein the insert body (10) is formed to be insertable into the spectacle temple.

3. Joint according to claim 2, **characterized in that** the insert body (10) has a cavity (16) for forming a spring housing (7) and that the temple part (3) has a bore on the rear wall of the open cuboid so that the compression spring element (4) is introducible through the temple part into the cavity (7) of the insert body (10).

4. Joint according to one of the preceding claims, **characterized in that** the front part (2) further comprises a base plate (11) which is arranged at the front part of the holding lug (9).

5. Joint according to claim 4, **characterized in that** the base plate (11) is formed in such a way that in the opened state of the spectacle temple the base plate (11) covers the side of the cuboid of the temple part (3) which is open at the front.

6. Joint according to claim 4 or 5, **characterized in that** a connecting element (12) is arranged on the forward-facing side of the base plate (11), which is provided for fastening the frame for the spectacle glasses.

7. Joint according to one of the preceding claims, **characterized in that** the holding lug (9) has a radius at the outside rear and a rounded edge at the inside rear.

8. Joint according to one of the preceding claims, **characterized in that** the compression spring element (4) consists of a compression spring (14) and a pin (15), wherein the pin (15) is arranged in the direction to the holding lug (9).

9. Joint according to one of the preceding claims, **characterized in that** the holding lug (9) is formed on the side facing the pin (15) in such a way that a constant compressive force is exerted on the compression spring (14) at an angular range of the joint parts of 90° to 108° relative to one another.

10. Joint according to claim 9, **characterized in that** the pin (15) is fixed or releasably connected to the compression spring (14).

11. Joint for a spectacle frame with temples, wherein the joint (1) consists of a front part (2), a temple part (3) and a compression spring element (4), wherein the front part (2) consists of a cuboid which is open towards the front, along one side and on the inside, and short, inwardly directed axes of rotation (6) are arranged on the opposing inner sides (5) of the open cuboid, and wherein the temple part (3) is designed in the form of a holding lug (9), wherein the holding lug (9) is designed to be insertable into the open cuboid of the front part (2) and hinging hooks (13) in the form of recesses are arranged in two opposing outer surfaces of the holding lug (9), which are hookable in the short axes of rotation (6) of the front part (2), whereby the front part (2) and the temple part (3) are jointly connectable with one another and the compression spring element (4) is arranged between the front part (2) and the temple part (3) in such a way that the temple part (3) is fixed movably on the axes of rotation (6) of the front part (2).

12. Joint according to one of the preceding claims, **characterized in that** the compression spring element (4) is designed in the form of a leaf spring and/or in the form of an elastomer part and/or moulded rubber part.

## Revendications

1. Charnière pour une monture de lunettes avec branches, la charnière (1) étant composée d'une partie avant (2), d'une partie (3) côté branche et d'un élément ressort de pression (4), la partie (3) côté branche étant composée d'un parallélépipède ouvert vers l'avant, le long d'un côté et intérieurement, et, sur les côtés intérieurs opposés (5) du parallélépipède ouvert, sont agencés des axes de rotation courts (6) dirigés vers l'intérieur, et la partie avant (2) étant réalisée sous la forme d'un ergot de retenue (9), l'ergot de retenue (9) étant réalisé de manière à être apte à être introduit dans le parallélépipède ouvert de la partie (3) côté branche, et des crochets (13) formant palier, sous forme d'évidements, sont placés dans deux surfaces extérieures opposées de l'ergot de retenue (9), ces crochets étant aptes à être accrochés sur les axes de rotation courts (6) de la partie (3) côté branche, ce qui permet de relier l'une à l'autre, de manière articulée, la partie avant (2) et la partie (3) côté branche et de disposer l'élément ressort de pression (4) entre la partie avant (2) et la partie (3) côté branche de telle sorte que la partie frontale (2) soit fixée de manière mobile sur les axes de rotation (6) de la partie (3) côté branche.

2. Charnière selon la revendication 1, **caractérisée en ce que** la partie (3) côté branche présente un corps d'insertion (10) qui s'étend vers l'arrière depuis la partie (3) côté branche vers la branche de lunettes, le corps d'insertion (10) étant conçu de manière à être apte à être inséré dans la branche de lunettes.

3. Charnière selon la revendication 2, **caractérisée en ce que** le corps d'insertion (10) présente une cavité (16) pour former un logement (7) de ressort et **en ce que** la partie (3) côté branche présente un alésage sur la paroi arrière du parallélépipède ouvert, de sorte que l'élément ressort de pression (4) soit apte à être inséré à travers la partie côté branche dans la cavité (7) du corps d'insertion (10).

4. Charnière selon l'une des revendications précédentes, **caractérisée en ce que** la partie avant (2) présente en outre une plaque de base (11) qui est agencée sur la partie avant de l'ergot de retenue (9).

5. Charnière selon la revendication 4, **caractérisée en ce que** la plaque de base (11) est conçue de telle sorte que, à l'état ouvert de la branche de lunettes, la plaque de base (11) recouvre le côté avant ouvert du parallélépipède de la partie (3) côté branche.

6. Charnière selon la revendication 4 ou la revendication 5, **caractérisée en ce qu'**un élément de liaison (12) est agencé sur le côté tourné vers l'avant de la plaque de base (11), lequel élément est prévu pour la fixation de la monture des verres de lunettes.

7. Charnière selon l'une des revendications précédentes, **caractérisée en ce que** l'ergot de retenue (9) présente un rayon sur son côté arrière extérieur et un bord arrondi sur son côté arrière intérieur.

8. Charnière selon l'une des revendications précédentes, **caractérisée en ce que** l'élément ressort de pression (4) est constitué par un ressort de pression (14) et une tige (15), la tige (15) étant agencée en direction de l'ergot de retenue (9).

9. Charnière selon l'une des revendications précédentes, **caractérisée en ce que** l'ergot de retenue (9) est conçu, du côté orienté vers la tige (15), de telle sorte qu'une force de pression constante soit exercée sur le ressort de pression (14) lorsque les pièces articulées forment entre elles un angle compris entre 90° et 108°.

10. Charnière selon la revendication 9, **caractérisée en ce que** la tige (15) est reliée au ressort de pression (14) de manière fixe ou amovible.

11. Charnière pour une monture de lunettes avec branches, la charnière (1) étant composée d'une partie avant (2), d'une partie (3) côté branche et d'un élément ressort de pression (4), la partie avant (2) étant composée d'un parallélépipède ouvert vers l'avant, le long d'un côté et intérieurement, et, sur les côtés intérieurs opposés (5) du parallélépipède ouvert, sont agencés des axes de rotation courts (6) dirigés vers l'intérieur, et la partie (3) côté branche est réalisée sous la forme d'un ergot de retenue (9), l'ergot de retenue (9) étant réalisé de manière à être apte à être introduit dans le parallélépipède ouvert de la partie avant (2), et des crochets (13) formant palier sont agencés sous forme d'évidements dans deux faces extérieures opposées de l'ergot de retenue (9), qui sont aptes à être accrochés sur les axes de rotation courts (6) de la partie avant (2), la partie avant (2) et la partie (3) côté branche étant aptes à être reliées l'une à l'autre de manière articulée, et l'élément ressort de pression (4) étant agencé entre la partie avant (2) et la partie (3) côté branche de telle sorte que la partie (3) côté branche soit fixée de manière mobile sur les axes de rotation (6) de la partie avant (2).

12. Charnière selon l'une des revendications précédentes, **caractérisée en ce que** l'élément ressort de pression (4) est réalisé sous la forme d'un ressort à lame et/ou sous la forme d'une pièce en élastomère et/ou d'une pièce moulée en caoutchouc.
